# EUROPÄISCHE PATENTSCHRIFT

(11) **EP 1 259 395 B1**
(45) Veröffentlichungstag und Bekanntmachung des Hinweises auf die Patenterteilung: **22.03.2006**
(21) Anmeldenummer: 01911697.9
(22) Anmeldetag: 23.02.2001
(51) Int. Cl.: B60N 2/235

(54) **VERSTELLVORRICHTUNG FÜR RÜCKENLEHNEN VON FAHRZEUGSITZEN, INSBESONDERE VON KRAFTFAHRZEUGSITZEN**
DEVICE FOR ADJUSTING BACKRESTS OF VEHICLE SEATS, ESPECIALLY MOTOR VEHICLE SEATS
DISPOSITIF DE REGLAGE DE DOSSIERS DE SIEGES DE VEHICULES, NOTAMMENT DE VEHICULES AUTOMOBILES

(30) Priorität: 25.02.2000 DE 10009016; 15.04.2000 DE 10018733
(43) Veröffentlichungstag der Anmeldung: 27.11.2002
(73) Patentinhaber: Sitech Sitztechnik GmbH, 38442 Wolfsburg (DE)
(72) Erfinder: SHEPARD, Phil, Charles, Birmingham B28 0LA (GB)
(74) Vertreter: Reinhold, Silke
(86) Internationale Anmeldenummer: PCT/EP2001/002098
(87) Internationale Veröffentlichungsnummer: WO 2001/062540

(56) Entgegenhaltungen:
- EP-A- 0 758 592
- DE-A- 2 019 707
- DE-A- 3 205 117
- FR-A- 2 277 550
- FR-A- 2 541 950
- GB-A- 2 116 249
- US-A- 3 788 698
- US-A- 3 897 608
- US-A- 4 659 146

## Beschreibung

Die Erfindung betrifft eine Verstellvorrichtung für Rückenlehnen von Fahrzeugsitzen, insbesondere von Kraftfahrzeugsitzen, nach dem Oberbegriff des Anspruchs 1 (siehe z.B. DE-A-32 05 117).

Derartige Verstellvorrichtungen für Rückenlehnen von Fahrzeugsitzen sind allgemein bekannt, wobei diese Verstellvorrichtungen in der Regel so aufgebaut sind, dass zur Umwandlung von Radial- und Drehmomentkräften in vertikale Befestigungskräfte relativ große und schwere Anpassungsplatten erforderlich sind. Ein kompakter Aufbau einer derartigen Verstellvorrichtung ist mit solchen relativ großen und schweren Anpassungsplatten nur schlecht möglich. Des weiteren besteht hier die Gefahr, dass sich diese Anpassungsplatten bei einer normalen Sitzbelastung durch die Rückenlehne hindurchdrücken, was den Sitzkomfort des Sitzbenutzers verringert.

Es ist daher Aufgabe der Erfindung, eine Verstellvorrichtung für Rückenlehnen von Fahrzeugsitzen, insbesondere von Kraftfahrzeugsitzen, zu schaffen, die bei günstigen Kraftflussverhältnissen einfach und kompakt aufgebaut ist.

Diese Aufgabe wird gelöst mit den Merkmalen des Anspruchs 1.

Gemäß Anspruch 1 weist die Verstellvorrichtung einen mit einer Rückenlehne mittelbar oder unmittelbar koppelbaren Rückenlehnenarm auf, der um eine vorzugsweise durch einen Schwenkzapfen gebildete, ortsfeste Schwenkachse verschwenkbar ist, wobei am Rückenlehnenarm zudem ein Eingriffsprofil ausgebildet ist, das mit einem Gegenprofil eines Gleitverriegelungselementes zusammenwirkt welches mit wenigstens einem Gleitelement als Bestandteil einer Betätigungsvorrichtung verbunden ist, das in einer Führungskulisse eines Befestigungselementes verschiebbar geführt und gehalten ist dergestalt dass bei einer Verschiebung des wenigstens einen Gleitelementes in der Führungskulisse das Gleitverriegelungselement mittels der Betätigungsvorrichtung relativ zum Rückenlehnenarm verstellbar ist, und das Gegenprofil zur wenigstens teilweisen Freigabe der Verschwenkung des Rückenlehnenarms wenigstens teilweise außer Eingriff mit dem Eingriffsprofil bringbar ist.

Ein derartiges Gleitverrieglungselement als separates Bauteil kann auf einfache Weise relativ zum Rückenlehnenarm verstellt werden, selbst wenn sich der Rückenlehnenarm unter einer Betriebslast befindet, was z.B. der Fall ist, wenn ein Sitzbenutzer auf dem Fahrzeugsitz sitzt oder die Rückenlehne auf andere Weise vorbelastet ist. Damit kann die Lehnenverstellung insgesamt auf einfache und kraftsparende Weise durchgeführt werden.

Diese Lehnenverstellung ist unter Berücksichtigung des Komforts auf eine sehr kompakte Bauweise bei sehr hohen Belastungen ausgelegbar.

Durch die ortsfest sowie vorzugsweise durch einen Schwenkzapfen ausgebildete Schwenkachse wird erreicht, dass der gesamte Mechanismus, wenn seine Betätigung z. B. synchron mit anderen Mechanismen erfolgen soll, lediglich unter minimaler Berücksichtigung von Toleranzen auf die gleiche Achse ausgerichtet zu werden braucht. Die Betätigung mehrerer derartiger Verstellvorrichtungen kann dann z. B. von der Entfernung aus auf einfache Weise durch einen Seilzug oder einen schmalen Draht erfolgen. Ein derartiger ortsfester Schwenkzapfen als Schwenkachse gestattet somit das Zusammenwirken ähnlicher Mechanismen ohne eine direkte Verbindung derselben, wodurch sich vielfältige konstruktive Freiräume, insbesondere für die Realisierung eines kompakten Aufbaus ergeben.

Insbesondere kann ein derartiger Aufbau der Verstellvorrichtung mit einem Gleitverriegelungselement auch sehr kompakt, d.h. relativ kleinbauend ausgeführt sein. Dadurch kann die Verstellvorrichtung vorteilhaft so im Bereich einer Rückenlehne angeordnet werden, dass die Gefahr eines Durchdrückens einzelner Bauteile durch die Rückenlehne erheblich verringert ist, wodurch wiederum der Sitzkomfort wesentlich erhöht wird.

Grundsätzlich kann das Eingriffsprofil und das Gegenprofil beliebig ausgebildet sein, solange sichergestellt ist, dass diese einerseits ein Verschwenken des Rückenlehnenarms blockieren können und andererseits eine Verschwenkung freigeben können, wobei das Eingriffsprofil und das Gegenprofil zudem so ausgebildet sein können, dass je nach Eingriffszustand, z.B. in gewissen Zwischenstellungen zwischen zwei maximalen Verstellpositionen des Gleitverriegelungselementes, auch lediglich eine teilweise Verschwenkung des Rückenlehnenarms freigegeben sein kann.

Eine derartige Verstellvorrichtung ist des weiteren universell einsetzbar, so z.B. für Liegesitz-Rückenlehnen in Kraftfahrzeugen, und insbesondere auch bei geteilten Sitzbanksystemen einer zweiten oder hinteren Reihe mit in der Rückenlehne integriertem Sicherheitsgurt für die in der Mitte sitzenden Fahrzeuginsassen.

In einer besonders bevorzugten Ausführungsform ist das Gleitverriegelungselement plattenförmig ausgebildet und weist an einer dem Eingriffsprofil zugeordneten Stirnseite das Gegenprofil auf, wobei das Gleitverriegelungselement im montierten Zustand in etwa in der Schwenkebene des Rückenlehnenarms liegt, so dass die beiden gegenüberliegenden Seitenflächen des plattenförmigen Gleitverriegelungselements in etwa quer zur Schwenkachsenlängsrichtung ausgerichtet sind. Ein derartiges Gleitverriegelungselement ist bei hoher Funktionssicherheit einfach und preiswert herstellbar. Zudem ist hiermit ein besonders kompakter Aufbau möglich. In einer bevorzugten konkreten Ausgestaltung hierzu ist das Eingriffsprofil an einem in einer Grundstellung des Rückenlehnenarms unteren freien Ende des Rückenlehnenarms ausgebildet, wobei das Gegenprofil an einer oberen Stirnseite des plattenförmigen Gleitverriegelungselementes ausgebildet ist. Dadurch kann das Gleitveniegelungselement für einen Eingriff des Gegenprofils mit dem Eingriffsprofil in etwa vertikal verstellt werden, d. h. in der Grundstellung des Rückenlehnenarms nach oben und unten.

Das Gleitverriegelungselement ist erfindungsgemäss mit wenigstens einem Gleitelement als-Bestandteil der Betätigungsvorrichtung verbunden, das in einer Führungskulisse eines ortsfest anordenbaren Befestigungselements verschiebbar geführt und gehalten ist, so dass bei einer Verschiebung des wenigstens einen Gleitelements in der Führungskulisse das Gleitverriegelungselement relativ zum Rückenlehnenarm verstellbar ist. Das ortsfest anordenbare Befestigungselement ist dabei vorzugsweise als eine mit dem Fahrzeugboden fest verbindbare Befestigungsplatte ausgebildet. Vorteilhaft können mit einem derartigen Aufbau die Bodenbefestigungskräfte zur Erhöhung des Verriegelungsvermögens der Verstellvorrichtung in Situationen mit hoher Belastung, wie dies z. B. bei einem Aufprall der Fall ist, verwendet werden, da die Kräfte hier über das Befestigungselement direkt in den Bereich des wenigstens einen Gleitelements und damit des Gleitverriegelungselementes sowie des Rückenlehnenarms geleitet werden, was die Anpreßkraft des Gegenprofils am Eingriffsprofil vorteilhaft begünstigt. Dadurch ist somit ein günstiger Kraftfluss möglich, der es ohne Funktionsverlust und ohne Verminderung der Eigenfestigkeit erlaubt, die Verstellvorrichtung insgesamt geringer zu dimensionieren, d. h. insbesondere ohne die im Stand der Technik üblichen schweren Anpassungsplatten. Des weiteren wird mit einem derartigen in einer Führungskulisse eines ortsfesten Befestigungselementes geführten Gleitelement ein kompakter und unabhängiger Mechanismus geschaffen, bei dem sich die strukturellen Kernteile gegenseitig festhalten.

Ein besonders kompakter und funktionssicherer Aufbau ergibt sich, wenn in Schwenkachsenlängsrichtung gesehen zu beiden Seiten des Gleitverriegelungselementes jeweils ein Gleitelement vorgesehen ist, das mit dem Gleitverriegelungselement verbunden ist. Dabei ist jedes dieser beiden Gleitelemente in einer Führungskulisse eines zu beiden Seiten des Gleitverriegelungselementes ortsfest angeordneten Befestigungselementes verschiebbar geführt und gehalten. Ein derartiger Aufbau zeichnet sich zudem auch durch eine besonders hohe Festigkeit auf, was insbesondere in Situationen mit hoher Belastung, wie z. B. bei einem Aufprall, von Vorteil ist. Die Befestigungselemente sind vorteilhaft besonders einfach und damit preiswert herstellbare Befestigungsplatten. Grundsätzlich ist es auch möglich, dass zwei oder mehr Gleitelemente auf beiden Seiten des Gleitverriegelungselements angeordnet sind.

Bevorzugt sind sämtliche Gleitelemente mit dem Gleitverriegelungselement mittels wenigstens einem Befestigungsstift verbunden, wobei vorzugsweise zwei Befestigungsstifte verwendet werden, die sowohl die vorgesehenen Gleitelemente als auch das Gleitverriegelungselement durchdringen. Eine derartige Verbindungsmöglichkeit ist ebenfalls einfach und preiswert herstellbar und gewährleistet zudem eine hohe Funktionssicherheit.

Grundsätzlich gibt es verschiedene Möglichkeiten, die Führungskulisse und das darin verschiebbar geführte Gleitelement auszubilden. In einer konkreten und besonders bevorzugten Ausführungsform ist die Führungskulisse mit einem Übermaß gegenüber dem Gleitelement ausgebildet, so dass das Gleitelement bei einer Betätigung der Betätigungsvorrichtung in der Führungskulisse zwangsgeführt zwischen einer ersten Verschiebestellung und einer zweiten Verschiebestellung verschiebbar ist. In der ersten Verschiebestellung befindet sich das Gegenprofil mit dem Eingriffsprofil in einer Eingriffstellung, während sich das Gegenprofil in der zweiten Verschiebestellung außer Eingriff mit dem Eingriffsprofil des Rückenlehnenarms befindet. In einer besonders bevorzugten Ausführungsform kann, wie dies bereits vorstehend näher erläutert worden ist, auch in Zwischenpositionen in Abhängigkeit von der Geometrie des Eingriffsprofils und des Gegenprofils ggf. eine hinsichtlich des maximalen Schwenkwinkels reduzierte Verschwenkung des Rückenlehnenarms möglich sein.

Für eine kompakte Bauweise ist das Gleitelement vorzugsweise plattenförmig sowie in etwa rechteckförmig als Gleitblock ausgebildet, wobei das plattenförmige Gleitelement und das Befestigungselement vorzugsweise eine gleiche Materialstärke aufweisen, so dass das plattenförmige Gleitelement im montierten Zustand der Verstellvorrichtung bündig mit wenigstens den die Führungskulisse unmittelbar umgebenden Außenseitenwandbereichen des Befestigungselements ist. Vorteilhaft ist das Befestigungselement als Befestigungsplatte mit durchgehend in etwa gleicher Materialstärke ausgebildet, so dass im montierten Zustand ein besonders kompakter Aufbau der Verstellvorrichtung möglich ist, die insbesondere für die im Rückenlehnenbereich gegebenen engen Einbausituationen hervorragend geeignet ist. Ferner ist auch hier wiederum die Herstellung eines derartigen Gleitelements auf preiswerte und einfache Weise möglich.

Wenigstens eines der Gleitelemente ist mit der als Freigabevorrichtung fungierenden Betätigungsvorrichung zur Verstellung des wenigstens einen Gleitelements und damit des Gleitverriegelungselementes relativ zum Rückenlehnenarm gekoppelt. Bei zwei an gegenüberliegenden Seiten des Gleitverriegelungselementes angeordneten Gleitelementen kann jedem eine Betätigungsvorrichtung zugeordnet sein, wobei eine dieser beiden Betätigungsvorrichtungen dann als Ausgleichsvorrichtung für eine gute und sichere Führung bei der Verstellung der Gleitelemente und damit des Gleitverriegelungselementes relativ zum Rückenlehnenarm dienen kann.

In einer konkreten Ausführungsform umfasst die Betätigungsvorrichtung weiter eine Verbindungsplatte, die mit dem Gleitelement verbunden ist und zudem einen von der Verbindungsplatte wegstehenden Führungszapfen aufweist. Dieser Führungszapfen ist in einer Führungskulisse einer Schwenkplatte der Betätigungsvorrichtung so geführt, dass beim Verschwenken der Schwenkplatte um eine ortsfeste Schwenkplatten-Schwenkachse der Führungszapfen durch die Zwangsführung in der Führungskulisse und damit auch die Verbindungsplatte relativ zum Befestigungselement verstellbar ist. Dadurch wird wiederum das mit der Verbindungsplatte verbundene Gleitelement in der Gleitelement-Führungskulisse verschoben. Die Schwenkplatte kann dabei mit einem Bedienelement, z.B. einem Hebel, einer Taste oder dergleichen gekoppelt sein, der beispielsweise vom Sitzbenutzer mit der Hand bedienbar ist. Mit einem derartigen Aufbau ergibt sich eine besonders kraftsparende Möglichkeit der Verriegelung und Entriegelung der Verstellvorrichtung selbst unter normaler Betriebslast eines Fahrzeugsitzes.

Eine vorteilhafte Funktionsintegration und damit Bauteilreduzierung ergibt sich dadurch, dass die Schwenkplatten-Schwenkachse durch einen Teilbereich eines die Rückenlehnenarm-Schwenkachse bildenden Schwenkzapfens gebildet ist. In einer bevorzugten konkreten Ausführungsform kann dabei dieser Teilbereich durch ein gegenüber dem Schwenkzapfenmittenbereich im Durchmesser verringertes Ende des Schwenkzapfens gebildet sein.

Der ortsfeste Schwenkzapfen erstreckt sich dabei durch eine in der Verbindungsplatte ausgebildete Ausnehmung, die vorzugsweise als einfach und preiswert herzustellende Langlochausnehmung ausgebildet ist, so dass die Verbindungsplatte auch relativ zum ortsfesten Schwenkzapfen bewegbar, vorzugsweise wenigstens anhebbar und absenkbar ist.

In einer besonders bevorzugten Ausführungsform ist vorgesehen, dass in Schwenkachsenlängsrichtung gesehen jeweils zu beiden Seiten von die Seitenflächen des plattenförmigen Gleitverriegelungselementes begrenzenden linken und rechten Stirnseiten wenigstens ein in Schwenkachsenlängsrichtung verlaufendes zylindrisches Stiftelement angeordnet ist, das im montierten Zustand der Verstellvorrichtung jeweils zwischen den beiden Befestigungselementen gehalten ist. Mit derartigen-Stiftelementen kann vorteilhaft insbesondere bei einem Aufprall, bei dem hohe Belastungen auftreten, die Festigkeit der Verstellvorrichtung zusätzlich wesentlich erhöht werden, so dass hier ohne großen Bauteilaufwand insgesamt gute Kraftflußverhältnisse auftreten. Dies ist insbesondere auch dann der Fall, wenn wie in einer besonders vorteilhaften Ausführungsform hierzu zwischen den zylindrischen Stiftelementen und der linken und rechten Stirnseite des Gleitverriegelungselements jeweils ein vorzugsweise gleich großer Spaltabstand ausgebildet ist. Vorteilhaft kann damit nämlich erreicht werden, dass z.B. im Falle eines Aufpralls, bei dem die Gleitelemente mitsamt dem Gleitverriegelungselement seitlich, dh. in Schwenkachsenlängsrichtung verschoben werden, nach einem gewissen Verschiebeweg der jeweilige Spaltabstand geschlossen wird, so dass das jeweilige Lastrichtungsprofil des zylindrischen Stiftelements eine weitere Verformung der Gleitelemente verhindern. Dadurch wird auf einfache Weise vorteilhaft eine hohe Festigkeit der Verstellvorrichtung, insbesondere im Falle eines Aufpralls, bei dem sehr hohe Belastungen auftreten, geschaffen.

In einer konkreten Ausführungsform weisen die zylindrischen Stiftelemente einen mittleren Zylinderbereich auf, an den sich in Schwenkachsenlängsrichtung gesehen jeweils zu beiden Enden zylindrische Lagerzapfen geringeren Durchmessers anschließen, mittels denen die zylindrischen Stiftelemente an den Befestigungselementen gelagert sind. Weiter vorteilhaft weisen die zylindrischen Stiftelemente in Schwenkachsenlängsrichtung gesehen in etwa die gleiche Breite als das Gleitverriegelungselement auf, so dass im montierten Zustand der Verstellvorrichtung die Befestigungselemente und/oder die Gleitelemente an den Seitenflächen des Gleitverriegelungselements anliegen oder unmittelbar benachbart davon angeordnet sind. Auch dies trägt wiederum dazu bei, dass der Aufbau insgesamt sehr kompakt ist.

Die ortsfeste Schwenkachse des Rückenlehnenarms ist dabei vorzugsweise durch einen unverdrehbar angeordneten Schwenkzapfen ausgebildet, wobei sich der Schwenkzapfen in einer bevorzugten Ausgestaltung vom Rückenlehnenarm ausgehend vorzugsweise zu beiden Seiten des Rückenlehnenarms durch ein Befestigungselement sowie ggf. durch eine Verbindungsplatte und/oder ggf. eine Schwenkplatte erstrecken kann.

In einer besonders bevorzugten Ausführungsform ist das Eingriffsprofil und das Gegenprofil jeweils durch ein Zahnprofil gebildet, mit dem auch bei einem Eingriff des Eingriffprofils mit dem Gegenprofil in Abhängigkeit von einer bestimmten Krafteinwirkung eine seitliche Verschiebung des Gleitverriegelungselementes retativ zum Rückenlehnenarm in Schwenkachsenlängsrichtung möglich ist. Dies ist insbesondere in Verbindung mit den zylindrischen Stiftelementen im Falle eines Aufpralls von Vorteil, da hier dann auf einfache Weise die seitliche Verschiebung des Gleitverriegelungselementes und damit der Gleitelemente sichergestellt ist.

Der Rückenlehnenarm ist grundsätzlich langgestreckt ausgebildet und in einer Grundstellung in etwa vertikal ausgerichtet, wobei die Schwenkachse in einem Abstand von den freien Enden des Rückenlehnenarms liegt. Der Abstand zu einem in der Grundstellung unteren freien Ende des Rückenlehnenarms ist dabei kleiner, vorzugsweise wesentlich kleiner als zum in der Grundstellung oberen freien Ende des Rückenlehnenarms. Dadurch können die Verriegelungsteile der Verstellvorrichtung, nämlich das Gleitverriegelungselement sowie die damit zusammenwirkenden Gleitelemente relativ tief an der Verstellvorrichtung angeordnet werden, wodurch sich das Durchdrücken von Teilen durch die Rückenlehne hindurch in allen Verstellpositionen vorteilhaft vermeiden lässt.

Für eine Ausführung gemäß Patentanspruch 5 werden bevorzugt als Gleitverriegelung zwei Gleitelemente in einer Führungskulisse geführt, damit eine verkantungsfreie Funktion sowohl für Aufwärtsverstellung als auch für Abwärtsverstellung gewährleistet ist. Außerdem kann im Crashfall die eingeleitete Energie durch größere Anlageflächen sehr viel besser in die Bodenbefestigungsplatten und in den Boden abgeleitet werden kann.

Für die Ausführung gemäß Patentanspruch 10 wird bevorzugt das Verriegelungselement von zwei Betätigungsvorrichtungen verstellt. Auf diese Weise kann das Verriegelungselement im Crashfall sehr viel länger im verriegelten Zustand gehalten werden. Diese günstige Wirkung wird auch durch die auf Selbsthemmung im Verriegelungszustand ausgelegten Führungskulissen in den Schwenkplatten unterstützt.

Zur kompakten Bauweise und Betätigung gemäß Patentanspruch 12 leistet die Doppelnutzung der Schwenkachse des Schwenkzapfens wesentliche Beiträge. Des weiteren sind die Betätigungsvorrichtungen durch die gemeinsame Schwenkachse einfach ansteuerbar und die Handauslösung kann flexibel in der Rückenlehne untergebracht werden.

Die Ausführung gemäß Patentanspruch 16 sieht vor, dass im Crashfall die zylindrischen Stiftelemente als sekundäre Crashunterstützung dienen. Bei nachgebender Führungskulisse in den Bodenbefestigungsplatten kann sich das Gleitverriegelungselement zusätzlich an den zylindrischen Stiftelementen abstützen und Kraft in die Bodenbefestigungsplatten ableiten. Führt man die zylindrischen Stiftelemente bevorzugt als Exzenter aus, können diese als einstellbarer Toleranzausgleich genutzt werden.

Das Ausführungsbeispiel gemäß Patentanspruch 22 betrifft eine Verstellvorrichtung, die auch in kinematischer Umkehr - also Rückenlehnenarm als feststehender Fuß und bewegliche Teile in der Rückenlehne - funktionsfähig ist.

Die erfindungsgemäße Verstellvorrichtung erlaubt eine sehr torsionssteife Auslegung. Dies ist von herausgehobener Bedeutung weil im Crashfall über den Rückenlehnenarm eine starke Torsionskomponente in die Verstellvorrichtung eingeleitet wird, so dass die Eingriffsprofile versuchen, sich gegeneinander zu verdrehen. Durch gezielte Auslegung der Bodenbefestigungsplatten wird sichergestellt, daß der für die Krafteinleitung optimale Verriegelungszustand aufrechterhalten bleibt. Weitere Maßnahmen ergänzend oder alternativ können sein:
- Unterstützung der Bodenbefestigungsplatten durch die beidseitig angebrachten Betätigungsvorrichtungen,
- Abstützung der Bodenbefestigungsplatten durch die zylindrischen Stiftelemente,
- verformungssteife Gestaltung des Fußteils.

Anhand einer Zeichnung wird die Erfindung näher erläutert.

Es zeigen:
- Fig. 1: eine schematische, perspektivische und auseinandergezogene Darstellung einer Verstellvorrichtung mit einem Gleitverriegelungselement außer Eingriff mit einem Rückenlehnenarm,
- Fig. 2: eine schematische, perspektivische und auseinandergezogene Darstellung einer Verstellvorrichtung mit einem sich im Eingriff mit dem Rückenlehnenarm befindlichen Gleitverriegelungselement, und
- Fig. 3: eine schematische Darstellung des Gleitverriegelungselementes mit zu beiden Seiten angeordneten zylindrischen Stiftelementen, die einen Spaltabstand zu dem Gleitverriegelungselement aufweisen.
- Fig.4: eine beispielhafte Einbausituation für eine Rücksitzanlage eines Kraftfahrzeuges.

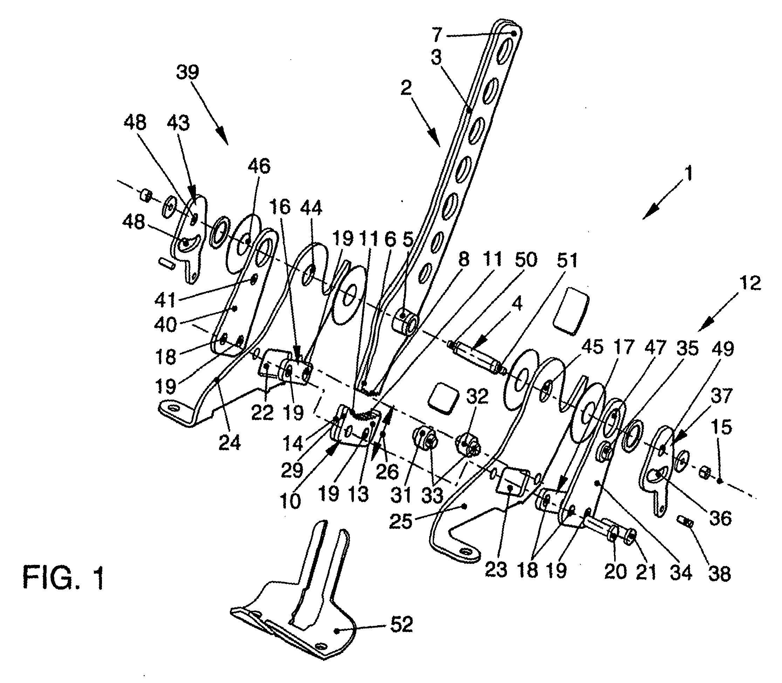

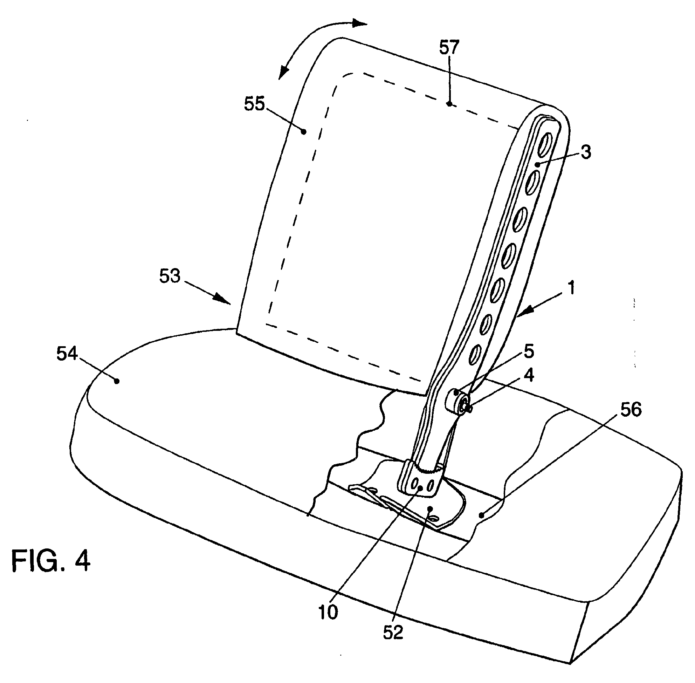

In der Fig. 1 ist schematisch und perspektivisch sowie in auseinandergezogener Darstellung eine Verstellvorrichtung 1 für Rückenlehnen von Fahrzeugsitzen, insbesondere Kraftfahrzeugsitzen, gezeigt. Diese Verstellvorrichtung 1 umfasst einen in der Fig. 1 in einer Grundstellung 2 dargestellten Rückenlehnenarm 3, der mit einer in Fig. 4 skizzierten Rückenlehne 55 einer Rücksitzanlage 53 mittelbar oder unmittelbar gekoppelt werden kann. Die Rücksitzanlage 53 weist hier eine 1/3 - 2/3 -Teilung im Lehnenbereich auf, für den hier ein an sich bekanntes Rahmengestell 57 vorgesehen ist. Außerdem gehören zu dieser Rücksitzanlage eine Sitzbank 54, die auf einem Karosserieblech 56 aufliegt. An letzterem ist gleichzeitig zur Lagerung des Rückentehnenrahmens 3 ein Fußteil 52 mittels einer Verbindungstechnik, insbesondere Verschraubung, besfestigt.

Dieser Rückenlehnenarm 3 ist um einen, eine ortsfeste Schwenkachse bildenden Schwenkzapfen 4 schwenkbar, der in einem entsprechenden Aufnahmeauge 5 des Rückenlehnenarms 3 aufgenommen ist.

Der Rückenlehnenarm 3 ist hier langgestreckt ausgebildet, wobei der Schwenkzapfen 4 in einem Abstand von den freien Enden des Rückenlehnenarms 3 angeordnet ist und der Abstand des Schwenkzapfens 4 zu einem unteren freien Ende 6 des Rückenlehnenarms 3 wesentlich kleiner ist als zum oberen freien Ende 7 des Rückenlehnenarms.

Wie dies der Fig. 1 weiter entnommen werden kann, ist an dem unteren freien Ende 6 des Rückenlehnenarms 3 ein Zahnprofil als Eingriffsprofil 8 ausgebildet. Diesem Eingriffsprofil 8 ist ein an einer oberen Stirnseite 9 eines plattenförmigen Gleitverriegelungselementes 10 ausgebildetes Zahnprofil als Gegenprofil 11 zugeordnet. Das plattenförmige Gleitverriegelungselement 10 liegt dabei in etwa in der Schwenkebene des Rückenlehnenarms 3, so dass die beiden gegenüberliegenden Seitenflächen 13, 14 des plattenförmigen Gleitverriegelungselementes 10 in etwa quer zur durch den Schwenkzapfen 4 vorgegebenen Schwenkachsenlängsrichtung 15 ausgerichtet sind.

Wie dies aus der Fig. 1 weiter ersichtlich ist, ist in Schwenkachsenlängsrichtung 15 gesehen zu beiden Seiten des Gleitverriegelungselementes 10 jeweils ein als Gleitblock ausgebildetes Gleitelement 16, 17 vorgesehen. Diese sind Bestandteil einer als Freigabevorrichtung zur Verstellung der Gleitelemente 16, 17 und damit des Gleitverriegelungselements 10 relativ zum Rückenlehnenarm 3 betätigbaren Betätigungsvorrichtung 12 bzw. 39.

Die Gleitelemente 16, 17 weisen ebenso wie das Gleitverriegelungselement 10 zwei Durchgangslöcher 18, 19 auf, die im hier nicht dargestellten montierten Zustand der Verstellvorrichtung 1 miteinander fluchten. Durch diese Durchgangslöcher 18, 19 ist jeweils ein Befestigungsstift 20, 21 hindurchgesteckt, um die Gleitelemente 16, 17 mit dem Gleitverriegelungselement 10 in einer Anlageverbindung an den Seitenflächen 13, 14 festzulegen.

Wie dies aus der Darstellung der Fig. 1 weiter ersichtlich ist, sind die Gleitelemente 16, 17 plattenförmig sowie in etwa rechteckförmig ausgebildet und in einer Führungskulisse 22, 23 je einer zu beiden Seiten des Gleitverriegelungselements 10 angeordneten Bodenbefestigungsplatte 24, 25 verschiebbar geführt und gehalten.

Die Führungskulissen 22, 23 sind hier vorzugsweise quadratisch sowie mit einem Übermaß gegenüber den darin verschiebbar gehaltenen und geführten Gleitelementen 16, 17 ausgebildet, wobei die Gleitelemente 16, 17 eine in etwa gleiche Breite als die Führungskulissen 22, 23, jedoch eine geringere Höhenerstreckung als die Führungskulissen 22, 23 aufweisen, so dass die Gleitelemente 16, 17 zur Verstellung des Gleitverriegelungselementes 10 entsprechend dem Doppelpfeil 26 in Fig. 1 lediglich in Vertikalrichtung, d. h. in Längserstreckungsrichtung des sich in der Grundstellung 2 befindlichen Rückenlehnenarms 3 bewegen können.

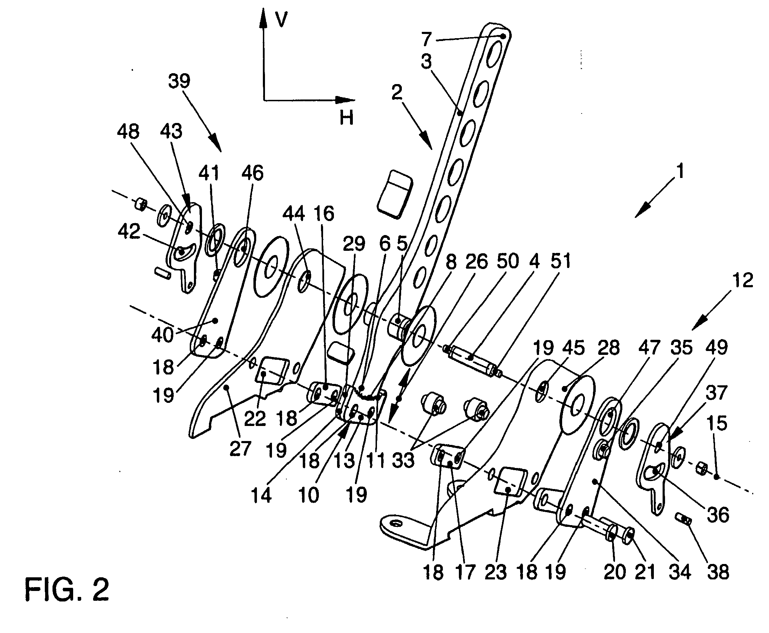

In der Fig. 2, die einen grundsätzlich gleichen Aufbau als die Verstellvorrichtung 1 der Fig. 1 zeigt, befindet sich das Gleitverriegelungselement 10 mit seinem Gegenprofil 11 in Eingriff mit dem Eingriffsprofil 8 am unteren freien Ende 6 des Rückenlehnenarms 3 und verhindert somit ein Verschwenken des Rückenlehnenarms 3 um den Schwenkzapfen 4.

Die Bodenbefestigungsplatten 24, 25 sind ortsfest am Fahrzeugboden befestigt, um die Relativverschiebung der Gleitelemente 16, 17 in der Führungskulisse 22, 23 und damit des Gleitverriegelungselements 10 relativ zur Bodenbefestigungsplatte 24, 25 zu ermöglichen.

In der Darstellung der Fig. 2 sind gleiche Teile mit gleichen Bezugszeichen bezeichnet, wobei hier im Unterschied zur Ausführungsform nach Fig. 1 unterschiedliche Bodenbefestigungsplatten 27, 28 verwendet worden sind.

Wie dies aus den schematischen Darstellungen der Fig. 1 und 2 weiter ersichtlich ist, weisen die plattenförmigen Gleitelemente 16, 17 und die Bodenbefestigungsplatten 24, 25 eine in etwa gleiche Materialstärke auf.

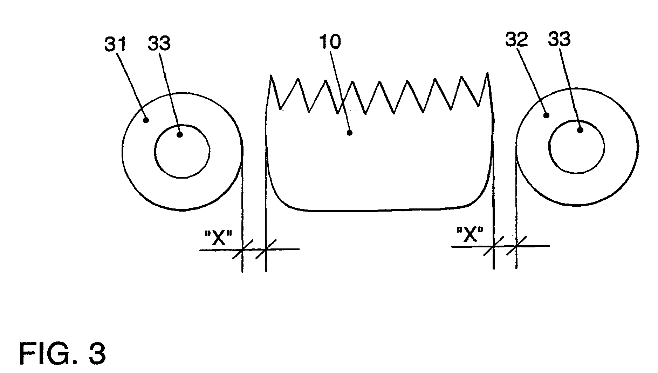

Wie dies insbesondere auch aus der Fig.3 ersichtlich ist, ist in Schwenkachsenlängsrichtung 15 gesehen jeweils zu beiden Seiten von die Seitenflächen 13, 14 des plattenförmigen Gleitverriegelungselementes 10 begrenzenden linken und rechten Stirnseiten 29, 30 jeweils ein in Schwenkachsenlängsrichtung 15 verlaufendes zylindrisches Stiftelement 31, 32 vorgesehen, das einen mittleren Zylinderbereich aufweist, an den sich in Schwenkachsenlängsrichtung 15 gesehen jeweils zu beiden Enden zylindrische Lagerzapfen 33 geringeren Durchmessers anschließen, mittels denen die zylindrischen Stiftelemente 31, 32 an den Bodenbefestigungsplatten 24, 25 lagerbar sind.

Die zylindrischen Stiftelemente 31, 32 weisen im montierten Zustand in Schwenkachsenlängsrichtung 15 gesehen in etwa die gleiche Breite als das Gleitverriegelungselement 10 auf, wodurch sichergestellt ist, dass im montierten Zustand der Verstellvorrichtung 1 die Gleitelemente 16, 17 an den Seitenflächen 13, 14 des Gleitverriegelungselements 10 anliegen und gleichzeitig die Gleitelemente 16, 17 auch in den Führungskulissen 22, 23 der ggf. ebenfalls randseitig am Gleitverriegelungselement anliegenden Bodenbefestigungsplatten 24, 25 geführt und aufgenommen sind.

Wie dies aus der Fig. 3 ersichtlich ist, ist zwischen den zylindrischen Stiftelementen 31, 32 und der linken und rechten Stirnseite 29, 30 des Gleitverriegelungselements 10 jeweils ein gleich großer Spaltabstand X ausgebildet.

Die Betätigungsvorrichtung 12 umfasst femerr eine Verbindungsplatte 34, die ebenfalls Durchgangslöcher 18, 19 aufweist und über die Befestigungsstifte 20, 21 mit dem Gleitelement 17 fest verbunden ist. Die Verbindungsplatte 34 weist an einem oberen Ende ferner einen von der Verbindungsplatte 34 wegragenden Führungszapfen 35 auf, der im montierten Zustand der Verstellvorrichtung 1 in einer Führungskulisse 36 einer Schwenkplatte 37 als weiterem Bauteil der Betätigungsvorrichtung 12 geführt ist. Beim Verschwenken der Schwenkplatte 37 wird der Führungszapfen 35 in der Führungskulisse 36 zwangsgeführt mitgenommen und damit die Verbindungsplatte 34 relativ zur ortsfesten Bodenbefestigungsplatte 25 nach oben angehoben oder nach unten abgesenkt, wodurch das mit der Verbindungsplatte 34 verbundene Gleitelement 17 in der Gleitelement-Führungskulisse 23 zur Verstellung des Gleitverriegelungselementes 10 relativ zum Rückenlehnenarm 3 verschoben werden kann. Die Schwenkplatte 37 kann beispielsweise über einen hier lediglich schematisch dargestellten Kurbelzapfen 38 verschwenkt werden.

In der in der Fig.2 gezeigten Eingriffsposition ist ein Verschwenken des Rückenlehnenarms 3 blockiert. In einer abgesenkten Stellung, bei der sich Eingriffsprofil 8 und Gegenprofil 11 außer Eingriff befinden, ist das Verschwenken des Rückenlehnenarms 3 dagegen freigegeben.

Die Betätigungsvorrichtung 39 ist im wesentlichen baugleich mit der Betätigungsvorrichtung 12. Auch hier ist das Gleitelement 16 mit einer Verbindungsplatte 40 über die beiden Befestigungsstifte 20, 21 verbunden ist, die wiederum in der eben beschriebenen Art und Weise über einen Führungszapfen 41 mit einer Führungskulisse 42 einer Schwenkplatte 43 gekoppelt ist. Anders als die Betätigungsvorrichtung 12 dient die Betätigungsvorrichtung 39 hier jedoch lediglich als Ausgleichsvorrichtung.

Den Fig. 1 und 2 kann zudem weiter entnommen werden, dass sich der Schwenkzapfen 4 vom Rückenlehnenarm 3 ausgehend zu beiden Seiten des Rückenlehnenarms 3 durch entsprechende Ausnehmungen 44, 45 in den Bodenbefestigungsplatten 24, 25 sowie Langlochausnehmungen 46, 47 in den Verbindungsplatten 34, 40 sowie durch Ausnehmungen 48, 49 in den Schwenkplatten 37, 43 erstreckt. Zwischen den einzelnen Bauteilen können Beilagscheiben vorgesehen sein. Der Schwenkzapfen 4 weist einen dickeren mittleren Schwenkzapfenbereich auf und erstreckt sich mit einem an beiden Enden ausgebildeten zylindrischen Lagerzapfen geringeren Durchmessers durch die Ausnehmungen 48, 49 der Schwenkplatten 37, 43, so dass diese zylindrischen Lagerzapfen 50, 51 vorzugsweise die Schwenkachse für die Schwenkplatten 37, 43 bilden. Auf die Enden der zylindrischen Lagerzapfen 50, 51 können noch Muttern aufgeschraubt werden.

Die Langlochausnehmungen 46, 47 weisen ein Übermaß gegenüber dem Schwenkzapfen 4 auf, damit die Verbindungsplatten 34, 40 relativ zum Schwenkzapfen 4 anhebbar und absenkbar sind.

Mit einem derartigen Aufbau der Verstellvorrichtung 1 kann das Gleitverriegelungselement 10 durch Betätigung der Betätigungsvorrichtung 12 unabhängig von einer Sitzbelastung auf einfache Weise kraftsparend zwischen einer ersten Verschiebestellung, bei der sich das Gegenprofil 11 mit dem Eingriffsprofil 8 in einer Eingriffsstellung befindet, und einer zweiten Verschiebestellung, bei der sich das Gegenprofil 11 außer Eingriff mit dem Eingriffsprofil 8 befindet, verstellt werden. Gegebenenfalls ist hier in Abhängigkeit von der Geometrie des Eingriffsprofil 8 und des Gegenprofils 11 auch eine Verschwenkung des Rückeniehnenarms 3 und damit der hier nicht dargestellten Rückenlehne in definierten und gegenüber dem maximalen Schwenkwinkel reduzierten Schwenkwinkelbereichen möglich.

Eine derartige Verstellvorrichtung 1 kann auf einfache und preiswerte Weise aus Stahlblech, Preßteilen und gedrehten oder geschmiedeten Achsen und Stiften hergestellt werden, da hierfür keine speziellen oder teuren Fertigungsverfahren erforderlich sind.

Die Anwendung der Verstellvorrichtung ist nicht auf die in Fig. 4 gezeigte Rücksitzanlage beschränkt. Die Rückenlehne 55 kann sich einteilig über die gesamte Fahrzeugbreite erstrecken oder in gleich große Hälften aufgeteilt sein. Die erfindungsgemäße Verstellvorrichtung kann in einem weiten Fahrzeugspektrum (Personenkraftwagen, Klein- und Großbusse) sowohl im Bereich der Fahrzeugmitte als auch den Seitenwänden benachbart eingebaut werden.

### BEZUGSZEICHENLISTE

- 1: Verstellvorrichtung
- 2: Grundstellung
- 3: Rückenlehnenarm
- 4: Schwenkzapfen
- 5: Aufnahmeauge
- 6: unteres freies Ende
- 7: oberes freies Ende
- 8: Eingriffsprofil
- 9: obere Stirnseite
- 10: Gleitverriegelungselement
- 11: Gegenprofil
- 12: Betätigungsvorrichtung
- 13: Seitenfläche
- 14: Seitenfläche
- 15: Schwenkachsenlängsrichtung
- 16: Gleitelement
- 17: Gleitelement
- 18: Durchgangslöcher
- 19: Durchgangslöcher
- 20: Befestigungsstift
- 21: Befestigungsstift
- 22: Führungskulisse
- 23: Führungskulisse
- 24: Bodenbefestigungsplatte
- 25: Bodenbefestigungsplatte
- 26: Doppelpfeil
- 27: Bodenbefestigungsplatte
- 28: Bodenbefestigungsplatte
- 29: linke Stirnseite
- 30: rechte Stirnseite
- 31: zylindrisches Stiftelement
- 32: zylindrisches Stiftelement
- 33: zylindrische Lagerzapfen
- 34: Verbindungsplatte
- 35: Führungszapfen
- 36: Führungskulisse
- 37: Schwenkplatte
- 38: Kurbelzapfen
- 39: Betätigungsvorrichtung
- 40: Verbindungsplatte
- 41: Führungszapfen
- 42: Führungskulisse
- 43: Schwenkplatte
- 44: Ausnehmung
- 45: Ausnehmung
- 46: Langlochausnehmung
- 47: Langlochausnehmung
- 48: Ausnehmung
- 49: Ausnehmung
- 50: zylindrische Lagerzapfen
- 51: zylindrische Lagerzapfen
- 52: Fußteil
- 53: Rücksitzanlage
- 54: Sitzbank
- 55: Rückenlehne
- 56: Karosserieblech
- 57: Rahmengestell
- X: Spaltabstand

## Patentansprüche

1. Verstellvorrichtung für Rückenlehnen (55) von Fahrzeugsitzen (53), insbesondere von Kraftfahrzeugsitzen, **dadurch gekennzeichnet, dass** die Verstellvorrichtung (1) einen mit einer Rückenlehne (55) mittelbar oder unmittelbar koppelbaren Rückenlehnenarm (3) aufweist, der um eine vorzugsweise durch einen Schwenkzapfen (4) gebildete, ortsfeste Schwenkachse verschwenkbar ist, dass am Rückenlehnenarm (3) ein Eingriffsprofil (8) ausgebildet ist, das mit einem Gegenprofil (11) eines Gleitverriegelengselementes (10) zusammenwirkt, welches mit wenigstens einem Gleitelement (16, 17) als Bestandteil einer Betätigungsvorrichtung (12, 39) verbunden ist, das in einer Führungskulisse (22, 23) eines Befestigungselementes (24, 25; 27, 28) verschiebbar geführt und gehalten ist dergestalt, dass bei einer Verschiebung des wenigstens einen Gleitelements (16, 17) in der Führungskulisse (22, 23) das Gleitverriegelungselement (10) mittels der Betätigungsvorrichtung (12, 39) relativ zum Rückenlehnenarm (3) verstellbar ist, und das Gegenprofil (11) zur wenigstens teilweisen Freigabe der Verschwenkung des Rückenlehnenarms (3) wenigstens teilweise außer Eingriff mit dem Eingriffsprofil (8) bringbar ist.

2. Verstellvorrichtung nach Anspruch 1, **dadurch gekennzeichnet,**
**dass** das Gleitverriegelungselement (10) plattenförmig ausgebildet ist und an einer dem Eingriffsprofil (8) zugeordneten Stirnseite (9) das Gegenprofil (11) aufweist, wobei das Gleitverriegelungselement (10) im montierten Zustand in etwa in der Schwenkebene des Rückenlehnenarms (3) liegt dergestalt,
**dass** die beiden gegenüberliegenden Seitenflächen (13, 14) des plattenförmigen Gleitverriegelungselementes (10) in etwa quer zur Schwenkachsenlängsrichtung (15) ausgerichtet sind.

3. Verstellvorrichtung nach Anspruch 2, **dadurch gekennzeichnet,**
**dass** das Eingriffsprofil (8) an einem in einer Grundstellung (2) des Rückenlehnenarms (3) unterem freien Ende (6) des Rückenlehnenarms (3) ausgebildet ist,
**dass** das Gegenprofil (11) an einer oberen Stirnseite (9) des plattenförmigen Gleitverriegelungselements (10) ausgebildet ist dergestalt,
**dass** das Gleitverriegelungselement (10) für einen Eingriff des Gegenprofils (11) mit dem Eingriffsprofil (8) in etwa vertikal verstellbar ist.

4. Verstellvorrichtung nach einem der Ansprüche 1 bis 3, **dadurch gekennzeichnet, dass** das Befestigungselement (24, 25; 27, 28), vorzugsweise eine Bodenbefestigungsplatte, ortsfest anordenbar, vorzugsweise mit dem Fahrzeugboden fest verbindbar ist.

5. Verstellvorrichtung nach Anspruch 4, **dadurch gekennzeichnet, dass** in Schwenkachsenlängsrichtung (15) gesehen zu beiden Seiten des Gleitverriegelungselementes (10) jeweils ein Gleitelement (16, 17) vorgesehen ist, das mit dem Gleitverriegelungselement (10) verbunden ist, wobei jedes dieser beiden Gleitelemente (16, 17) in der Führungskulisse (22, 23) des zu beiden Seiten des Gleitverriegelungselementes (10) ortsfest angeordneten Befestigungselementes (24, 25; 27, 28) verschiebbar geführt und gehalten ist.

6. Verstellvorrichtung nach Anspruch 4 oder Anspruch 5, **dadurch gekennzeichnet, dass** sämtliche Gleitelemente (16, 17) mit dem Gleitverriegelungselement (10) mittels wenigstens eines diese durchdringenden Befestigungsstiftes (20, 21), vorzugsweise zwei Befestigungsstiften, verbunden sind.

7. Verstellvorrichtung nach einem der Ansprüche 4 bis 6, **dadurch gekennzeichnet,**
**dass** die Führungskulisse (22, 23) mit einem Übermaß gegenüber dem Gleitelement (16, 17), vorzugsweise einem plattenförmig sowie in etwa rechteckförmig ausgebildeten Gleitblock, ausgebildet ist dergestalt,
**dass** das Gleitelement (16, 17) bei einer Betätigung der Betätigungsvorrichtung (12, 39) in der Führungskulisse (22, 23) zwangsgeführt zwischen einer ersten Verschiebestellung, bei der sich das Gegenprofil (11) mit dem Eingriffsprofil (8) in einer Eingriffsstellung befindet, und einer zweiten Verschiebestellung, bei der sich das Gegenprofil (11) außer Eingriff mit dem Eingriffsprofil (8) des Rückenlehnenarms (3) befindet, verschiebbar ist, wobei ggf. in Zwischenpositionen in Abhängigkeit von der Geometrie des Eingriffsprofils (8) und des Gegenprofils (11) eine Verschwenkung des Rückenlehnenarms (3) und damit der Rückenlehne in definierten und gegenüber dem maximalen Schwenkwinkel reduzierten Schwenkwinkelbereichen durchführbar ist.

8. Verstellvorrichtung nach Anspruch 7, **dadurch gekennzeichnet, dass** das plattenförmige Gleitelement (16, 17) und das Befestigungselement (24, 25; 27, 28) eine in etwa gleiche Materialstärke aufweisen, so dass das plattenförmige Gleitelement (16, 17) im montierten Zustand der Verstellvorrichtung (1) in etwa bündig wenigstens mit den die Führungskulisse (22, 23) umgebenden Außenseitenwandbereichen des Befestigungselements (24, 25; 27, 28) ist.

9. Verstellvorrichtung nach einem der Ansprüche 5 bis 8, **dadurch gekennzeichnet, dass** wenigstens eines der Gleitelemente (16, 17) mit der Betätigungsvorrichtung (12, 39) als Freigabevorrichtung zur Verstellung des wenigstens einen Gleitelements (16, 17) und damit des Gleitverriegelungselementes (10) relativ zum Rückenlehnenarm (3) gekoppelt ist.

10. Verstellvorrichtung nach Anspruch 9, **dadurch gekennzeichnet, dass** bei zwei an gegenüberliegenden Seiten des Gleitverriegelungselementes (10) angeordneten Gleitelementen (16, 17) jedem eine Betätigungsvorrichtung (12, 39) zugeordnet ist, wobei eine Betätigungsvorrichtung (39) als Ausgleichsvorrichtung dient.

11. Verstellvorrichtung nach einem der Ansprüche 4 bis 10, **dadurch gekennzeichnet,**
**dass** die Betätigungsvorrichtung (12, 39) weiter eine Verbindungsplatte (34, 40) umfasst, die mit dem Gleitelement (16, 17) verbindbar ist und zudem einen von der Verbindungsplatte (34, 40) wegragenden Führungszapfen (35, 41) aufweist, der in einer Führungskulisse (36, 42) einer Schwenkplatte (37, 43) als weiterem Bauteil der Betätigungsvorrichtung (12, 39) geführt ist dergestalt,
**dass** beim Verschwenken der Schwenkplatte (37, 43) um eine ortsfeste Schwenkplatten-Schwenkachse der zwangsgeführte Führungszapfen (35, 41) und damit die Verbindungsplatte (34, 40) relativ zum Befestigungselement (24, 25; 27, 28) verstellbar ist, wodurch das mit der Verbindungsplatte (34, 40) verbundene Gleitelement (16, 17) in der Gleitelement-Führungskulisse (22, 23) verschiebbar ist.

12. Verstellvorrichtung nach Anspruch 11, **dadurch gekennzeichnet, dass** die Schwenkplatten-Schwenkachse durch einen Teilbereich eines die Rückenlehnenarm-Schwenkachse bildenden Schwenkzapfens (4), vorzugsweise durch ein gegenüber dem Schwenkzapfenmittenbereich im Durchmesser verringertes Ende (50, 51) des Schwenkzapfens (4), gebildet ist.

13. Verstellvorrichtung nach Anspruch 12, **dadurch gekennzeichnet,**
**dass** sich der ortsfeste Schwenkzapfen (4) durch eine in der Verbindungsplatte (34, 40) ausgebildete Ausnehmung (46, 47), vorzugsweise eine Langlochausnehmung, erstreckt, die ein Übermaß gegenüber dem Schwenkzapfen (4) aufweist dergestalt,
**dass** die Verbindungsplatte (34, 40) relativ zum ortsfesten Schwenkzapfen (4) bewegbar, vorzugsweise wenigstens anhebbar und absenkbar ist.

14. Verstellvorrichtung nach einem der Ansprüche 2 bis 13, **dadurch gekennzeichnet, dass** in Schwenkachsenlängsrichtung (15) gesehen jeweils zu beiden Seiten von die Seitenflächen (13, 14) des plattenförmigen Gleitverriegelungselementes (10) begrenzenden linken und rechten Stirnseiten (29, 30) wenigstens ein in Schwenkachsenlängsrichtung (15) verlaufendes vorzugsweise zylindrisches Stiftelement (31, 32) vorgesehen ist, das im montierten Zustand der Verstellvorrichtung (1) jeweils zwischen den beiden Befestigungselementen (24, 25; 27, 28) gehalten ist.

15. Verstellvorrichtung nach Anspruch 14, **dadurch gekennzeichnet, dass** zwischen den zylindrischen Stiftelementen (31, 32) und der linken und rechten Stirnseite (29, 30) des Gleitverriegelungselements (10) jeweils ein vorzugsweise gleich großer Spaltabstand (X) ausgebildet ist.

16. Verstellvorrichtung nach Anspruch 14 oder Anspruch 15, **dadurch gekennzeichnet, dass** die zylindrischen Stiftelemente (31, 32) einen mittleren Zylinderbereich aufweisen, an den sich in Schwenkachsenlängsrichtung (15) gesehen jeweils zu beiden Enden zylindrische Lagerzapfen (33) geringeren Durchmessers anschließen, mittels denen die zylindrischen Stiftelemente (31, 32) an den Befestigungselementen (24, 25; 27, 28) lagerbar sind.

17. Verstellvorrichtung nach einem der Ansprüche 14 bis 16, **dadurch gekennzeichnet, dass** die zylindrischen Stiftelemente (31, 32) im montierten Zustand in Schwenkachsenlängsrichtung (15) gesehen in etwa die gleiche Breite als das Gleitverriegelungselement (10) aufweisen, so dass im montierten Zustand der Verstellvorrichtung (1) die Befestigungselemente (24, 25; 27, 28) und/oder die Gleitelemente (16, 17) an den Seitenflächen (13, 14) des Gleitverriegelungselements (10) anliegen.

18. Verstellvorrichtung nach einem der Ansprüche 1 bis 17, **dadurch gekennzeichnet, dass** die ortsfeste Schwenkachse des Rückenlehnenarms (3) durch einen vorzugsweise unverdrehbar angeordneten Schwenkzapfen (4) ausgebildet ist.

19. Verstellvorrichtung nach Anspruch 18, **dadurch gekennzeichnet, dass** der Schwenkzapfen (4) sich vom Rückenlehnenarm (3) ausgehend vorzugsweise zu beiden Seiten des Rückenlehnenarms (3) durch ein Befestigungselement (24, 25; 27, 28) sowie ggf. durch eine Verbindungsplatte (34; 40) und/oder ggf. eine Schwenkplatte (37; 43) erstreckt.

20. Verstellvorrichtung nach einem der Ansprüche 3 bis 19, **dadurch gekennzeichnet, dass** das Eingriffsprofil (8) und das Gegenprofil (11) jeweils durch ein Zahnprofil oder dergleichen gebildet ist, mit dem auch bei einem Eingriff des Eingriffsprofils (8) mit dem Gegenprofil (11) in Abhängigkeit von einer bestimmten Krafteinwirkung eine seitliche Verschiebung des Gleitverriegelungselementes (10) relativ zum Rückenlehnenarm (3) in Schwenkachsenlängsrichtung (15) durchführbar ist.

21. Verstellvorrichtung nach einem der Ansprüche 1 bis 20, **dadurch gekennzeichnet,**
**dass** der Rückenlehnenarm (3) langgestreckt ausgebildet ist und in einer Grundstellung (2) in etwa vertikal ausgerichtet ist, und
**dass** die Schwenkachse in einem Abstand von den freien Enden (6, 7) des Rückenlehnenarms (3) liegt, wobei der Abstand zu einem in der Grundstellung unteren freien Ende (6) des Rückenlehnenarms (3) kleiner, vorzugsweise wesentlich kleiner, als zum in der Grundstellung (2) oberen freien Ende (7) des Rückenlehnenarms (3) ist.

22. Verstellvorrichtung nach einem der Ansprüche 1 bis 21, **dadurch gekennzeichnet, dass** die Verstellvorrichtung (1) im montierten Zustand in einem Bereich der Rückenlehne anordenbar ist, der außerhalb einer als Kontaktvermeidungszone ausgebildeten Insassensicherheitszone liegt.

## Claims

1. Adjusting device for backrests (55) of vehicle seats (53), in particular motor vehicle seats, **characterized in that** the adjusting device (1) has a backrest arm (3) which can be coupled indirectly or directly to a backrest (55) and can be pivoted about a positionally fixed pivot axis preferably formed by a pivot pin (4), **in that** an engagement profile (8) is formed on the backrest arm (3), said engagement profile interacting with a mating profile (11) of a sliding locking element (10), which is connected to at least one sliding element (16, 17) as part of an actuating device (12, 39), said sliding element being guided displaceably and held in a guide slot (22, 23) of a securing element (24, 25; 27, 28), in such a manner that when the at least one sliding element (16, 17) is displaced in the guide slot (22, 23), the sliding locking element (10) can be adjusted relative to the backrest arm (3) by means of the actuating device (12, 39) and the mating profile (11) can be at least partially disengaged from the engagement profile (8) for the at least partial release of the pivoting action of the backrest arm (3).

2. Adjusting device according to Claim 1, **characterized in that** the sliding locking element (10) is of plate-like design and has the mating profile (11) on an end side (9) assigned to the engagement profile (8), the sliding locking element (10) in the fitted state lying approximately in the pivoting plane of the backrest arm (3) in such a manner that the two opposite side surfaces (13, 14) of the plate-like sliding locking element (10) are orientated approximately transversely to the longitudinal direction (15) of the pivot axis.

3. Adjusting device according to Claim 2, **characterized in that** the engagement profile (8) is formed on a free end (6) of the backrest arm (3), which end is at the bottom in a normal position (2) of the backrest arm (3), and **in that** the mating profile (11) is formed on an upper end side (9) of the plate-like sliding locking element (10) in such a manner that the sliding locking element (10) can be adjusted approximately vertically for the mating profile (11) to engage with the engagement profile (8).

4. Adjusting device according to one of Claims 1 to 3, **characterized in that** the securing element (24, 25; 27, 28), preferably a floor securing plate, can be arranged in a fixed position and can preferably be connected fixedly to the vehicle floor.

5. Adjusting device according to Claim 4, **characterized in that** a respective sliding element (16, 17) connected to the sliding locking element (10) is provided on both sides of the sliding locking element (10), as seen in the longitudinal direction (15) of the pivot axis, each of these two sliding elements (16, 17) being guided displaceably and held in the guide slot (22, 23) of the securing element (24, 25; 27, 28) arranged in a fixed position on both sides of the sliding locking element (10).

6. Adjusting device according to Claim 4 or Claim 5, **characterized in that** all of the sliding elements (16, 17) are connected to the sliding locking element (10) by means of at least one securing pin (20, 21), preferably two securing pins, penetrating the latter.

7. Adjusting device according to one of Claims 4 to 6, **characterized in that** the guide slot (22, 23) is designed to be larger than the sliding element (16, 17), which is preferably a sliding block of plate-like and approximately rectangular design, in such a manner that when the actuating device (12, 39) is actuated, the sliding element (16, 17) can be displaced in the guide slot (22, 23) in a constrained manner between a first displacement position, in which the mating profile (11) is in an engaged position with the engagement profile (8), and a second displacement position, in which the mating profile (11) is disengaged from the engagement profile (8) of the backrest arm (3), it being possible, if appropriate in intermediate positions depending on the geometry of the engagement profile (8) and of the mating profile (11), for pivoting of the backrest arm (3) and therefore of the backrest to be carried out in defined pivoting angle ranges which are reduced in size in comparison with the maximum pivoting angle.

8. Adjusting device according to Claim 7, **characterized in that** the plate-like sliding element (16, 17) and the securing element (24, 25; 27, 28) have approximately the same material thickness, with the result that in the fitted state of the adjusting device (1) the plate-like sliding element (16, 17) is approximately flush at least with those outer side wall regions of the fastening element (24, 25; 27, 28) which surround the guide slot (22, 23).

9. Adjusting device according to one of Claims 5 to 8, **characterized in that** at least one of the sliding elements (16, 17) is coupled to the actuating device (12, 39) as a release device for adjusting the at least one sliding element (16, 17), and therefore the sliding locking element (10), relative to the backrest arm (3).

10. Adjusting device according to Claim 9, **characterized in that** with two sliding elements (16, 17) arranged on opposite sides of the sliding locking element (10) each one is assigned an actuating device (12, 39), one actuating device (39) serving as an equalizing device.

11. Adjusting device according to one of Claims 4 to 10, **characterized in that** the actuating device (12, 39) further comprises a connecting plate (34, 40), which can be connected to the sliding element (16, 17), and, in addition, a guide pin (35, 41) which protrudes from the connecting plate (34, 40) and is guided in a guide slot (36, 42) of a pivot plate (37, 43) as a further component of the actuating device (12, 39) in such a manner that when the pivot plate (37, 43) is pivoted about a positionally fixed pivot-plate pivot axis, the guide pin (35, 41), which is guided in a constrained manner, and therefore the connecting plate (34, 40), can be adjusted relative to the fastening element (24, 25; 27, 28), as a result of which the sliding element (16, 17), which is connected to the connecting plate (34, 40), can be displaced in the sliding-element guide slot (22, 23).

12. Adjusting device according to Claim 11, **characterized in that** the pivot-plate pivot axis is formed by a subregion of a pivot pin (4) forming the backrest-arm pivot axis, preferably by an end (50, 51) of the pivot pin (4) of reduced diameter in comparison with the pivot-pin central region.

13. Adjusting device according to Claim 12, **characterized in that** the positionally fixed pivot pin (4) extends through a recess (46, 47), preferably an oblong recess, which is formed in the connecting plate (34, 40) and is larger than the pivot pin (4), in such a manner that the connecting plate (34, 40) can be moved, preferably can at least be raised and lowered, relative to the positionally fixed pivot pin (4).

14. Adjusting device according to one of Claims 2 to 13, **characterized in that** at least one preferably cylindrical pin element (31, 32) is provided, as seen in the longitudinal direction (15) of the pivot axis, in each case on both sides of left and right end sides (29, 30) bounding the side surfaces (13, 14) of the plate-like sliding locking element (10), said pin element running in the longitudinal direction (15) of the pivot axis and in the fitted state of the adjusting device (1) being held in each case between the two securing elements (24, 25; 27, 28).

15. Adjusting device according to Claim 14, **characterized in that** a preferably identically sized gap spacing (X) is formed in each case between the cylindrical pin elements (31, 32) and the left and right end side (29, 30) of the sliding locking element (10).

16. Adjusting device according to Claim 14 or Claim 15, **characterized in that** the cylindrical pin elements (31, 32) have a central cylinder region adjoined in each case at both ends, as seen in the longitudinal direction (15) of the pivot axis, by cylindrical bearing pins (33) of smaller diameter by means of which the cylindrical pin elements (31, 32) can be mounted on the securing elements (24, 25; 27, 28).

17. Adjusting device according to one of Claims 14 to 16, **characterized in that** in the fitted state the cylindrical pin elements (31, 32) have, as seen in the longitudinal direction (15) of the pivot axis, approximately the same width as the sliding locking element (10), with the result that in the fitted state of the adjusting device (1) the securing elements (24, 25; 27, 28) and/or the sliding elements (16, 17) bear against the side surfaces (13, 14) of the sliding locking element (10).

18. Adjusting device according to one of Claims 1 to 17, **characterized in that** the positionally fixed pivot axis of the backrest arm (3) is formed by a pivot pin (4) which is preferably arranged in a non-rotatable manner.

19. Adjusting device according to Claim 18, **characterized in that** from the backrest arm (3) the pivot pin (4) preferably extends on both sides of the backrest arm (3) through a securing element (24, 25; 27, 28) and optionally through a connecting plate (34; 40) and/or optionally through a pivot plate (37, 43).

20. Adjusting device according to one of Claims 3 to 19, **characterized in that** the engagement profile (8) and the mating profile (11) are in each case formed by a toothed profile or the like which enables a lateral displacement of the sliding locking element (10) to be carried out relative to the backrest arm (3) in the longitudinal direction (15) of the pivot axis as a function of a certain action of force even when the engagement profile (8) is in engagement with the mating profile (11).

21. Adjusting device according to one of Claims 1 to 20, **characterized in that** the backrest arm (3) is of long stretched-out design and, in a normal position (2), is orientated approximately vertically, and **in that** the pivot axis lies at a distance from the free ends (6, 7) of the backrest arm (3), the distance to a free end (6) of the backrest arm (3), which end is at the bottom in the normal position, being smaller, preferably substantially smaller, than to that free end (7) of the backrest arm (3) which is at the top in the normal position (2).

22. Adjusting device according to one of Claims 1 to 21, **characterized in that** in the fitted state the adjusting device (1) can be arranged in a region of the backrest which lies outside an occupant's safety zone designed as a contact avoiding zone.

## Revendications

1. Dispositif de réglage pour dossiers (55) de sièges (53) de véhicules, notamment de sièges de véhicules automobiles, **caractérisé en ce que** le dispositif de réglage (1) comporte un bras (3) de dossier apte à être couplé directement ou indirectement à un dossier (55) et mobile en pivotement autour d'un axe de pivotement fixe formé de préférence par un tourillon (4), qu'un profil d'engagement (8) est formé sur le bras (3) du dossier, lequel profil coopère avec un profil complémentaire (11) d'un élément coulissant de verrouillage (10) qui est relié à au moins un élément coulissant (16, 17) faisant partie d'un dispositif d'actionnement (12, 39) et monté à coulissement et retenu dans une coulisse de guidage (22, 23) d'un élément de fixation (24, 25 ; 27, 28) de telle sorte que, lors du coulissement de l'au moins un élément coulissant (16, 17) dans la coulisse de guidage (22, 23), l'élément coulissant de verrouillage (10) est réglable par rapport au bras (3) du dossier au moyen du dispositif d'actionnement (12, 39) et le profil complémentaire (11) est apte à être désengagé du moins partiellement du profil d'engagement (8) afin d'autoriser du moins partiellement le pivotement du bras (3) du dossier.

2. Dispositif de réglage selon la revendication 1, **caractérisé en ce**
**que** l'élément coulissant de verrouillage (10) est conformé en forme de plaque et comporte sur une face frontale (9) associée au profil d'engagement (8) le profil complémentaire (11), l'élément coulissant de verrouillage (10) se situant à l'état monté sensiblement dans le plan de pivotement du bras (3) du dossier de sorte
**que** les deux faces latérales (13, 14) situées en regard l'une de l'autre de l'élément coulissant de verrouillage (10) en forme de plaque sont orientées sensiblement en travers de l'axe de pivotement dans le sens de sa longueur (15).

3. Dispositif de réglage selon la revendication 2, **caractérisé en ce**
**que** le profil d'engagement (8) est formé sur une extrémité inférieure (6) du bras (3) du dossier qui est libre lorsque le bras (3) du dossier se trouve dans une position de départ (2),
**que** le profil complémentaire (11) est formé sur une face frontale supérieure (9) de l'élément coulissant de verrouillage (10) en forme de plaque de telle sorte
**que** l'élément coulissant de verrouillage (10) est réglable sensiblement verticalement pour effectuer la coopération entre le profil complémentaire (11) avec le profil d'engagement (8).

4. Dispositif de réglage selon l'une quelconque des revendications 1 à 3, **caractérisé en ce**
**que** l'élément de fixation (24, 25 ; 27, 28), de préférence une plaque de fixation au plancher, est apte à être disposé de façon fixe et solidarisé au plancher du véhicule.

5. Dispositif de réglage selon la revendication 4, **caractérisé en ce**
**que**, depuis un point de vue suivant le sens de la longueur de l'axe de pivotement (15), un élément coulissant (16, 17) relié à l'élément coulissant de verrouillage (10) est respectivement prévu de chaque côté de l'élément coulissant de verrouillage (10), chacun de ces deux éléments coulissants (16, 17) étant guidé en coulissement et retenu dans la coulisse de guidage (22, 23) de l'élément de fixation (24, 25 ; 27, 28) disposé de façon fixe de chaque côté de l'élément coulissant de verrouillage (10).

6. Dispositif de réglage selon la revendication 4 ou la revendication 5, **caractérisé en ce**
**que** tous les éléments coulissants (16, 17) sont reliés à l'élément coulissant de verrouillage (10) au moyen d'au moins une, de préférence de deux, tiges de fixation (20, 21) traversant lesdits éléments coulissants.

7. Dispositif de réglage selon l'une quelconque des revendications 4 à 6, **caractérisé en ce**
**que** la coulisse de guidage (22, 23) est conformée pour avoir des dimensions supérieures à celles de l'élément coulissant (16, 17), de préférence un bloc coulissant en forme de plaque sensiblement rectangulaire, de telle sorte
**que**, lors d'un actionnement du dispositif d'actionnement (12, 39), l'élément coulissant (16, 17) est contraint et guidé dans la coulisse de guidage (22, 23) tout en étant mobile en coulissement entre une première position de coulissement, dans laquelle le profil complémentaire (11) se trouve dans une position d'engagement avec le profil d'engagement (8), et une deuxième position de coulissement, dans laquelle le profil complémentaire (11) est désengagé du profil d'engagement (8) du bras (3) du dossier, le bras (3) du dossier, et par conséquent le dossier, pouvant le cas échéant, dans des positions intermédiaires et en fonction de la géométrie du profil d'engagement (8) et du profil complémentaire (12), être pivotés dans des plages angulaires de pivotement définies et inférieures à l'angle de pivotement maximal.

8. Dispositif de réglage selon la revendication 7, **caractérisé en ce**
**que** l'élément coulissant (16, 17) en forme de plaque et l'élément de fixation (24, 25 ; 27, 28) ont sensiblement la même épaisseur de matériau de sorte que, à l'état monté du dispositif de réglage (1), l'élément coulissant (16, 17) en forme de plaque affleure sensiblement au moins les parties de paroi des faces extérieures de l'élément de fixation (24, 25 ; 27, 28) entourant la coulisse de guidage (22, 23).

9. Dispositif de réglage selon l'une quelconque des revendications 5 à 8, **caractérisé en ce**
**qu'**au moins un des éléments coulissants (16, 17) est couplé au dispositif d'actionnement (12, 39) faisant office de dispositif de libération destiné à autoriser le réglage de l'au moins un élément coulissant (16, 17) et par conséquent de l'élément coulissant de verrouillage (10) par rapport au bras (3) du dossier.

10. Dispositif de réglage selon la revendication 9, **caractérisé en ce**
**que**, dans le cas de deux éléments coulissants (16, 17) disposés sur des faces situées en regard l'une de l'autre de l'élément coulissant de verrouillage (10), un dispositif d'actionnement (12, 39) est associé à chacun d'eux, un dispositif d'actionnement (39) servant de dispositif de compensation.

11. Dispositif de réglage selon l'une quelconque des revendications 4 à 10, **caractérisé en ce**
**que** le dispositif d'actionnement (12, 39) comprend par ailleurs une plaque de liaison (34, 40) qui est apte à être reliée à l'élément coulissant (16, 17) et comporte en outre un téton de guidage (35, 41) qui s'étend en saillie à partir de la plaque de liaison (34, 40) et est guidé dans une coulisse de guidage (36, 42) d'une plaque pivotante (37, 43) constituant une autre pièce du dispositif d'actionnement (12, 39) de telle sorte
**que**, lors du pivotement de la plaque pivotante (37, 43) autour d'un axe de pivotement fixe de la plaque pivotante, le téton de guidage (35, 41) contraint et guidé, et par conséquent la plaque de liaison (34, 40), sont réglables par rapport à l'élément de fixation (24, 25 ; 27, 28), permettant ainsi le coulissement de l'élément coulissant (16, 17) relié à la plaque de liaison (34, 40) dans la coulisse de guidage (22, 23) de l'élément coulissant.

12. Dispositif de réglage selon la revendication 11, **caractérisé en ce que** l'axe de pivotement de la plaque pivotante est formé par une portion d'un tourillon (4) formant l'axe de pivotement du bras du dossier, de préférence par une extrémité (50, 51) du tourillon (4) d'un diamètre inférieur à celui de la partie centrale du tourillon.

13. Dispositif de réglage selon la revendication 12, **caractérisé en ce**
**que** le tourillon (4) fixe s'étend au travers d'un évidement (46, 47), de préférence d'un évidement en forme de trou oblong, pratiqué dans la plaque de liaison (34, 40) et ayant des dimensions supérieures à celles du tourillon (4) de telle sorte que la plaque de liaison (34, 40) est mobile, de préférence apte à être au moins soulevée et abaissée, par rapport au tourillon (4) fixe.

14. Dispositif de réglage selon l'une quelconque des revendications 2 à 13, **caractérisé en ce**
**qu'**au moins un élément formant tige (31, 32) de préférence cylindrique et s'étendant dans le sens de la longueur de l'axe de pivotement (15) est prévu, d'un point de vue suivant le sens de la longueur de l'axe de pivotement (15), de part et d'autre de faces frontales (29, 30) gauche et droite délimitant les faces latérales (13, 14) de l'élément coulissant de verrouillage (10) en forme de plaque, cet élément formant tige respectif étant retenu, à l'état monté du dispositif de réglage (1), entre les deux éléments de fixation (24, 25 ; 27, 28).

15. Dispositif de réglage selon la revendication 14, **caractérisé en ce**
**qu'**une fente (X) de taille de préférence identique est ménagée respectivement entre les éléments formant tige (31, 32) cylindriques et entre les faces frontales gauche et droite (29, 30) de l'élément coulissant de verrouillage (10).

16. Dispositif de réglage selon la revendication 14 ou la revendication 15, **caractérisé en ce**
**que** les éléments formant tige (31, 32) cylindriques comportent une partie cylindrique centrale à laquelle se raccordent, à chacune des deux extrémités, d'un point de vue suivant le sens de la longueur de l'axe de pivotement (15), des portées cylindriques (33) de diamètre inférieur au moyen desquelles les éléments formant tige (31, 32) cylindriques sont aptes à être montés sur les éléments de fixation (24, 25 ; 27, 28).

17. Dispositif de réglage selon l'une quelconque des revendications 14 à 16, **caractérisé en ce**
**que**, à l'état monté et d'un point de vue suivant le sens de la longueur de l'axe de pivotement (15), les éléments formant tige (31, 32) cylindriques ont sensiblement la même largeur que l'élément coulissant de verrouillage (10) de sorte qu' à l'état monté du dispositif de réglage (1) les éléments de fixation (24, 25 ; 27, 28) et/ou les éléments coulissants (16, 17) sont en appui contre les faces latérales (13, 14) de l'élément coulissant de verrouillage (10).

18. Dispositif de réglage selon l'une quelconque des revendications 1 à 17, **caractérisé en ce**
**que** l'axe de pivotement fixe du bras (3) du dossier est formé par un tourillon (4) monté de préférence immobile en rotation.

19. Dispositif de réglage selon la revendication 18, **caractérisé en ce**
**que** le tourillon (4) s'étend à partir du bras (3) du dossier de préférence de part et d'autre du bras (3) du dossier et traverse un élément de fixation (24, 25 ; 27, 28) ainsi que, le cas échéant, une plaque de liaison (34 ; 40) et/ou, le cas échéant, une plaque pivotante (37 ; 43).

20. Dispositif de réglage selon l'une quelconque des revendications 3 à 19, **caractérisé en ce**
**que** le profil d'engagement (8) et le profil complémentaire (11) sont formés chacun par une denture profilée ou similaire permettant d'effectuer, en fonction d'un certain effort appliqué, le coulissement latéral de l'élément coulissant de verrouillage (10) par rapport au bras (3) du dossier dans le sens de la longueur de l'axe de pivotement (15) même dans le cas où le profil d'engagement (8) est en prise avec le profil complémentaire (11).

21. Dispositif de réglage selon l'une quelconque des revendications 1 à 20, **caractérisé en ce**
**que** le bras (3) du dossier est conformé pour être allongé et est orienté sensiblement verticalement dans une position de départ (2), et
**que** l'axe de pivotement se situe à une distance des extrémités libres (6, 7) du bras (3) du dossier, la distance par rapport à une extrémité libre (6), inférieure en position de départ, du bras (3) du dossier, étant inférieure, de préférence bien inférieure, à la distance par rapport à l'extrémité libre (7), supérieure en position de départ (2), du bras (3) du dossier.

22. Dispositif de réglage selon l'une quelconque des revendications 1 à 21, **caractérisé en ce**
**que**, à l'état monté, le dispositif de réglage (1) est apte à être disposé dans une partie du dossier située en dehors d'une zone de sécurité passagers conformée en forme de zone destinée à éviter les contacts.
